Europäisches Patentamt

European Patent Office

Office européen des brevets

(19)

(11) **EP 1 473 359 A1**

(12) **EUROPEAN PATENT APPLICATION**

(43) Date of publication:
**03.11.2004 Bulletin 2004/45**

(51) Int Cl.⁷: **C12M 1/34**, C12Q 1/02,
G01N 33/487, G01N 27/22,
G01N 27/06, G01N 33/49

(21) Application number: **03400017.4**

(22) Date of filing: **02.05.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicants:
- **LMB Technologie GmbH
  85445 Schwaig (DE)**
- **Sirotech Ltd
  76123 Rehovot (IL)**

(72) Inventors:
- **Pietersz, Ruby,
  Sanquin Blood Bank North West Reg.
  1006 AC Amsterdam (NL)**

- **Feldberg, Roman, c/o Sirotech Ltd
  76123 Rehovot (IL)**
- **Jentsch, Klaus, Lmb Technologie GmbH
  85445 Schwaig (DE)**
- **Shinar, Eilat,
  c/o Magen David Adom Blood Services
  61091 Tel Aviv (IL)**

(74) Representative:
**Winter, Brandl, Fürniss, Hübner, Röss, Kaiser,
Polte Partnerschaft
Patent- und Rechtsanwaltskanzlei
Alois-Steinecker-Strasse 22
85354 Freising (DE)**

(54) **Non-invasive fast assessment of bacterial load in blood and blood products**

(57)    A method for determining the number of microorganisms in a liquid sample, including the steps of applying an AC voltage at a plurality of frequencies across at least a portion of the sample, measuring the impedance across at least the portion of the liquid sample in response to at least some of the plurality of AC frequencies, calculating at least one element of an equivalent electric circuit of the sample, based on the impedances measured across at least the portion, and evaluating the microorganism population in the sample based on the at least one calculated element.

FIG. 5

EP 1 473 359 A1

**Description**

The present invention relates to monitoring of microorganism populations in general and, more particularly, to non-invasive testing liquid samples such as blood products such as platelet units.

Devices for determining the microorganism population in a sample, such as a milk sample or a blood product sample, are known in the art. Using approximations of the rate of growth of known bacterial populations, past populations are extrapolated based on respective present populations. For example, impedance measurements of a sample are carried out during growth of bacteria in the sample. As the bacteria population in the sample grows and metabolizes, the ionic concentration of the sample changes and the electrical properties of the sample, particularly its impedance, changes. By measuring the changes in impedance at a constant temperature one can estimate the number of microorganisms.

However, in addition to inevitable error resulting from the above mentioned extrapolations, existing methods and devices for monitoring bacteria populations are generally extremely inaccurate and require a long incubation and monitoring period before conclusive results are reached. That is because significant changes in the electrical properties of the inoculated sample, which can not be attributed to non-bacterial activity in the sample, occur only at high microorganism concentrations. Since longer incubation periods are required in order to obtain high microorganism concentrations, extrapolations are made over longer time periods and, thus, the extrapolated results are considerably less accurate.

A common approach for determining the bacterial population of liquid samples, particularly milk samples and platelet units, is based on impedance measurements across the sample. Since the impedance of a sample generally decreases as the bacterial population grows, impedance measurements across the sample provide a basis for estimating the bacterial population in the sample.

For impedance measurements in liquid samples, AC voltage rather than DC voltage is generally provided to electrodes in the sample, since DC voltage tends to cause rapid, insulative, polarization at the interface between the liquid and the electrodes. Then high frequency AC voltage, typically 1 kHz or more, is used, the effect of such polarization on the measured impedances is greatly reduced, Existing microorganism counting devices typically use 1 kHz or 10 kHz AC voltage.

Unfortunately, existing bacteria growth testers are invasive and inaccurate and require long incubation periods to provide reasonable results. This is mainly due to the fact that significant impedance changes, typically several percent, appear only after long incubation periods, when very high bacterial concentrations, typically over 1,000,000 bacteria per cubic centimeter, are reached. In addition to their low sensitivity to changes in small bacterial populations, existing testers are extremely sensitive to temperature changes in the sample which effect both the growth rate of the bacterial population and, more importantly, the magnitude of the measured impedances. Furthermore, since evaluation of past populations is generally based on measurement of the sample at the start or incubation as a reference and no reference is available at the time of testing, a high detection threshold is required even when the temperature is strictly stabilized.

A method of detecting bacteria in a wine sample by measuring the impedance of the sample is described in P.A. Henschke & D. Susan Thomas, "Detection of Wine-Spoiling Yeasts by Electronic Methods", Journal of Applied Bacteriology 1988, Volume 64, pp. 123-133. This article suggests the use of a chamber containing a sterilized medium as reference to the tested wine sample. Reference to the sterilized medium compensates for changes in the impedance of the wine sample due to physical and chemical factors not related to microbial growth. To distinguish between wine-spoiling yeasts and non-wine-spoiling yeasts, this article explores the possibility of retarding the microbial growth in the non-wine-spoiling yeasts using ethanol.

There are various bacteria monitoring devices which are adapted for accommodating a plurality of liquid samples, wherein each sample is provided with a pair of electrodes for driving current therethrough. Such devices, typically referred to as multi-sensor impedance measuring devices, are useful for invasive monitoring of a plurality of liquid samples, simultaneously. Examples of such multi-sample testers are described in US Patents 3,743,581, 3,890,201 and 4,072,578.

The devices of US Patents 3,743,581, 3,890,201 and 4,072,578 include a plurality of individual chambers for accommodating a respective plurality of separate inoculated samples. The device described in Patent 4,072,578 also includes computerized means for controlling the bacterial growth analysis of the separate chambers.

A multi-chamber testing device based on the principles described above is commercially available from Malthus Instruments Ltd., England, under the trade name of Malthus 2000 Microbiology System. This device measures the conductance of up to 240 separate samples by providing 10 kHz AC voltage across electrodes associated with the samples. Microbial growth in each sample is detected by measuring changes in the conductance of a base which absorbs metabolic $CO_2$, using a computerized microbiological analyzer.

It should be appreciated, however, that the above mentioned deficiencies of existing single chamber devices, e.g. invasiveness and a low sensitivity which results in poor accuracy and which requires long testing periods, also apply to each chamber of existing multi-chamber devices. It should also be appreciated that none of the existing multi-chamber devices allow accurate detection of a small number of microorganisms in liquid samples.

It is appreciated that electrical property analysis techniques, particularly impedance spectroscopy, have improved considerably in the last decade. Thus, by constructing appropriate empirical models of the electrical behavior of a sample, i.e. constructing equivalent circuits of the sample, and by applying more automated, non-contact, and more accurate impedance measurement techniques, more conclusive evaluation of electrical-related properties of samples may now be possible. A general outline of the field of impedance spectroscopy can be found in J. Ross Macdonald, "Impedance Spectroscopy, Emphasizing solid materials and systems", New York, 1987. Bio-analytical applications of impedance spectroscopy can be found in Douglas B. Kell, "The Principles and Potential of Electrical Admittance Spectroscopy: an Introduction", from "Biosensors, Fundamentals and Applications", edited by Anthony P. F. Turner et. al., Oxford University Press, 1987.

A system for detecting the presence of microorganisms in a sample is described in US Patents 4,009,078, 4,200,493 and 4,246,343, all to Wilkins et el. The system described involves culturing microorganisms in a growth medium which is in contact with a measuring electrode and a measuring electrode, while measuring changes in potential between the electrodes.

The object of the present invention is to provide a significantly improved device for supervising the microorganism population in a sample using impedance analysis.

This object is solved by the subject-matter of the independent claims. Advantageous embodiments of the present invention are subject-matter of the dependent claims.

First, the present device requires shorter monitoring and incubation periods than prior art devices. second, the present device is capable of more accurately measuring extremely small microorganism populations. Third, in another preferred embodiment of the invention, the device is particularly suitable for non-invasive testing of platelet units.

According to the one aspect of the present invention, the measured impedances are decomposed, by appropriate circuitry, into predefined real and/or imaginary, i.e. complex, components. The present: inventor has found that some of these components are more sensitive than the total impedance of the sample to changes in the bacterial population in the sample. Preferably, according to this aspect of the present invention, the bacterial population in the sample is analyzed based on the more responsive component.

In accordance with one preferred embodiment of this aspect of the present invention, an embodiment which has been found suitable for milk samples and for platelet units, the bacterial population analysis is based on measurement of the Warburg's impedance. In each case, an element of an equivalent circuit, either of milk samples or of platelet units, is identified and analyzed, the element being particularly sensitive to changes in the bacterial concentration of the milk or of the platelet units respectively.

There is thus provided in accordance with a preferred embodiment of the present invention a method for evaluating the microorganisms population in a liquid sample including defining an equivalent electric circuit of the liquid sample, determining the magnitude of at least one element of the equivalent circuit, and evaluating the number of microorganisms in the sample based on the at least one determined element.

There is also provided in accordance with another preferred embodiment of the present invention a method for evaluating the microorganism population in a liquid sample including applying an AC voltage at a plurality of frequencies across at least a portion of the sample, measuring the impedance across at least the portion of the liquid sample in response to at least some of the plurality of AC frequencies, calculating at least one element of an equivalent electric circuit of the sample, based on the impedances measured across at least the portion, and evaluating the microorganism population in the sample based on the at least one calculated element.

Still further in accordance with a preferred embodiment of the present invention the element includes Warburg's impedance. Additionally in accordance with a preferred embodiment of the present invention the method includes incubating the liquid sample for a preselected period of time before measuring the impedance.

There is also provided in accordance with another preferred embodiment of the present invention a device for evaluating the microorganism population in a liquid sample including a container adapted for accommodating the liquid sample, and an impedance processor which applies an AC voltage at a plurality of frequencies across at least a portion of the liquid sample and measures the impedance across at least the portion of the liquid sample in response to at least some of the AC frequencies, wherein the impedance processor includes circuitry for calculating at least one element of an equivalent electric circuit of the sample based on the impedances measured across at least the portion and for evaluating the microorganism population in the sample based on the at least one calculated element.

Further in accordance with a preferred embodiment of the present invention the impedance processor is electrically non-invasively associated with the liquid sample.

Still further in accordance with a preferred embodiment of the present invention the impedance processor includes two capacitor plates for electrically non-invasively associating the impedance processor with the liquid sample.

Additionally in accordance with a preferred embodiment of the present invention the liquid sample has a plurality of sides and wherein both of the two capacitor plates are operatively associated with one of the plurality of sides.

Moreover in accordance with a preferred embodiment of the present invention the apparatus also includes a ground plate, wherein the ground plate and the two capacitor plates are largely coplanar, and wherein the ground plate surrounds and separates the two capacitor plates.

There is also provided in accordance with another preferred embodiment of the present invention a capacitive sensor for use in measuring the impedance of a liquid sample, the capacitive sensor including two capacitor plates, and a ground plate, wherein the ground plate and the two capacitor plates are largely coplanar, and wherein the ground plate surrounds and separates the two capacitor plates.

There is also provided in accordance with another preferred embodiment of the present invention a liquid sample holder for use in measuring the impedance of a liquid sample, the holder including a container for containing the liquid sample, and a capacitive sensor including two capacitor plates, and a ground plate, wherein the ground plate and the two capacitor plates are largely coplanar, and wherein the ground plate surrounds and separates the two capacitor plates.

The liquid sample may include a platelet unit. The frequencies may be between 10 Hz and 10 MHz.

The at least one impedance component may include an element of an equivalent electric circuit of the sample. The at least one impedance component may include Warburg's impedance.

The present invention will be better understood from the following detailed description of preferred embodiments of the invention, taken in conjunction with the following drawings in which:

Fig. 1 is a schematic illustration of a preferred equivalent electric circuit of milk;

Fig. 2 is a simplified pictorial illustration of a preferred capacitive sensor for use with a platelet unit, the sensor being constructed an operative in accordance with another preferred embodiment of the present invention;

Fig. 3 is a simplified pictorial illustration of the apparatus of Fig. 2 in use with a platelet unit;

Fig. 4 is a side view of the apparatus of Fig. 3;

Fig. 5 is a simplified pictorial illustration of a system for measuring a platelet unit, including the apparatus of Figs. 3 and 4; and

Fig 6 is a schematic illustration of a preferred equivalent electric circuit of a platelet unit together with the electrode assembly of Fig. 2.

It has been found by the present inventor that more sensitive measurements can be obtained if only a particular component of the sample impedances is measured by impedance processor, rather than the total impedance of the samples. To synthesize a desired impedance component, it is necessary to construct an equivalent, electrical circuit of the sample being tested, in which the desired impedance is included as a distinct circuit element.

Since the impedance of the equivalent circuit, by definition, is equivalent to the impedance of the sample being tested, one can construct a set of non-linear equations, depending on the sample material, by measuring the sample impedance at a plurality of AC frequencies. The number of impedance measurements needed corresponds to the number of unknowns in the equivalent circuit. In a preferred embodiment of the present invention, a plurality of AC frequencies in the range of approximately 10 Hz to approximately 10 MHz are used, in contrast to prior art devices which use a constant frequency, typically 1 kHz or 10 kHz.

For an outline on equivalent circuits in impedance spectroscopy see J. Ross Macdonald, "Impedance Spectroscopy, Emphasizing solid materials and systems", New York, 1987. on equivalent circuits of microorganism growth see J. C. S. Richard, A. C. Jason, G. Hobbs, D. M. Gibson and R. H. Christie, "Electronic Measurement of Bacterial Growth", Journal of Physics and Electronics Scientific Instruments, Volume II, 1978.

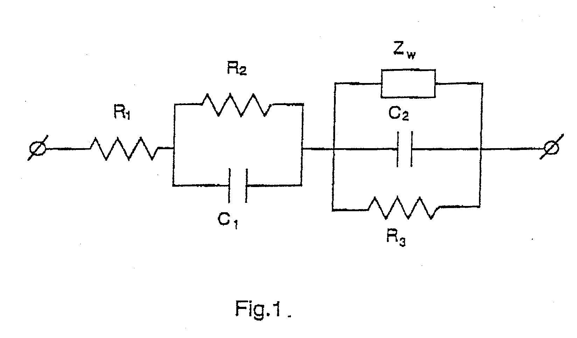

Fig. 1 illustrates a preferred equivalent circuit for invasive measuring of milk samples. As can be seen in Fig. 1, the preferred equivalent circuit includes three resistors, $R_1$, $R_2$ and $R_3$, two capacitors, $C_1$ and $C_2$ and one component, denoted $Z_W$, known as Warburg's Impedance. Warburg's impedance, as known in the art, is given by the following equation:

$$Z_W = W(1-j) / (2\pi f)^{1/2},$$

wherein:

$Z_W$ is Warburg's impedance;
$W$ is Warburg's variable;
$j$ is the imaginary impedance notation; and
$f$ is the AC frequency which is used.

It has been found by the present inventor that Warburg's Impedance is at least ten times more sensitive to changes in the number of bacteria in milk than the total impedance of the circuit.

It should be appreciated that other impedance components may be found to be equally significant or even more significant than Warburg's Impedance in detecting bacterial growth in other materials. Thus, the present invention is not limited to measurement of the specific impedance components described above for the purposes described above but, rather, to measurement of any component which may be found suitable for detecting and/or evaluating given bacteria related phenomena.

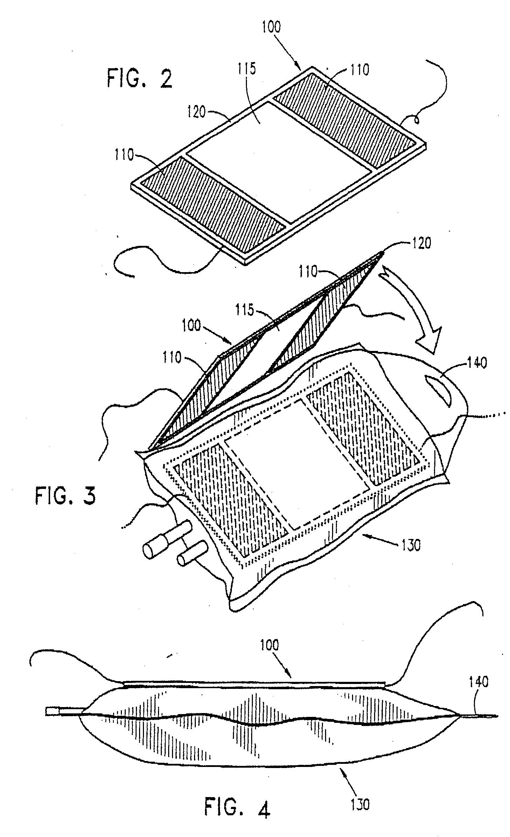

Reference is now made to Fig. 2 which is a simplified pictorial. illustration of a preferred capacitive sensor for use with a platelet unit, the capacitive sensor being constructed and operative in accordance with another preferred embodiment of the present invention. The apparatus of Fig. 2 comprises a capacitive sensor 100.

The capacitive sensor 100 preferably comprises two capacitor plates 110. The two capacitor plates 110 are preferably configured on the same side of a generally flat substrate 115. The capacitive sensor 100 also preferably comprises a ground plate 120. Preferably, the two capacitor plates 110 and the ground plate 120 are configured such that the ground plate 120 surrounds the two capacitor plates 110 and separates each of the two capacitor plates 110 from the other capacitor plate 110.

The ground plate 120 is believed to help exclude the influence of the surface of a bag or other container when measuring a platelet unit contained in the bag. It is believed that optimum measurement sensitivity in using the apparatus of Fig. 2 is obtained when each of the capacitor plates 110 is in a largely rectangular configuration, each of the capacitor plates 110 is of largely equal width, and the distance between the closest edges of the two capacitor plates 110 is approximately equal to the sum of the widths of the two capacitor plates 110, as can be seen in Fig. 2.

The apparatus of Fig. 2 may be produced using any of a number of methods well known in the art such as, for example, using an unetched computer circuit board and then etching the circuit board, as is well known in the art, in order to produce the apparatus of Fig. 2.

Reference is now made to Fig. 3, which is a simplified pictorial illustration of the apparatus of Fig. 2 in use with a platelet unit. The apparatus of Fig. 3 preferably comprises the capacitive sensor 100 of Fig. 2 and also preferably comprises a platelet unit 130. The platelet unit 130 typically comprises a sack 140, typically made of plastic. In Fig. 3, the capacitive sensor 100 is shown being placed on the sack 140.

It is appreciated that both of the capacitor plates 110 are mounted on one side of the sack 140 and generally in contact therewith. It is believed that the configuration shown in Fig. 3 is preferable, but it is appreciated that other configurations, including configurations having the capacitor plates 110 mounted on opposite sides of the sack 140 and configurations having the capacitor plates 110 mounted inside the sack 140 are also possible.

Reference is now additionally made to Fig. 4, which is a side view, showing that the capacitive sensor 100 may be permanently mounted on the sack 140, in which case the capacitive sensor 100 would typically be disposable 140.

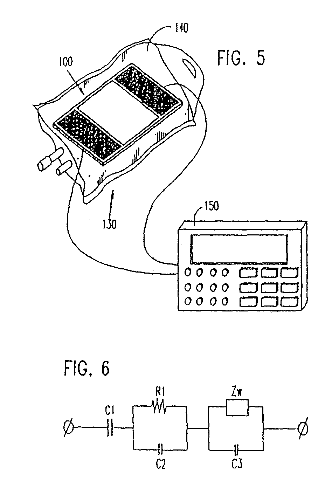

Reference is now made to Fig. 5, which is a simplified pictorial illustration of a system for measuring a platelet unit, including the apparatus of Figs. 3 and 4. The system of Fig. 5 comprises the capacitive sensor 100, and the platelet unit 130 including the sack 140. The system of Fig. 5 also comprises an impedance processor, operatively attached to the capacitive sensor 100. The impedance measuring unit 150 may be any suitable impedance measuring unit such as, for example, an HP 4284A, commercially available from Hewlett Packard.

Typically, the connection between the impedance processor 150 and the capacitive sensor 100 is made using a plurality of wires. Typically, one wire is attached to each of the capacitor plates 110 and one wire to the ground plate 120, but it is appreciated that other means of attachment suitable to the particular impedance processor 150 may be used.

The operation of the system of Fig. 5 is now briefly described. The capacitive sensor 100 is placed in contact with the platelet unit 130. The impedance processor 150 is preferably operative to measure the impedance of the system comprising the capacitive sensor 100 and the platelet unit 130 at a plurality of AC frequencies, as described above, and then operative to perform equivalent circuit analysis, as described above. Reference is now additionally made to Fig. 6, which is a schematic illustration of a preferred equivalent electric circuit of a platelet unit together with the electrode assembly of Fig 2. The circuit of Fig. 6 has been found to be preferable for use in analyzing platelet units.

The circuit of Fig, 6 includes three capacitors $C_1$, $C_2$ and $C_3$, one resistor $R_1$ and one Warburg's impedance $Z_W$.

The impedance processor 150 is preferably operative to compute the Warburg's impedance of the circuit of Fig. 6. It has been found that, for the circuit of Fig. 6, the computed Warburg's impedance correlates well with bacterial growth in the platelet unit 130, with the Warburg impedance dropping significantly at higher degrees of bacterial contamination.


## Claims

1. A method for evaluating the microorganisms population in a liquid sample comprising:

    defining an equivalent electric circuit of the liquid sample;
    determining the magnitude of at least one element of the equivalent circuit; and
    evaluating the number of microorganisms in the sample based on the at least one determined element.

2. A method for evaluating the microorganism population in a liquid sample comprising:

    applying an AC voltage at a plurality of frequencies across at least a portion of the sample; measuring the impedance across at least the portion of the liquid sample in response to at least some of the plurality of AC frequencies; calculating at least one element 0£ an equivalent electric circuit of the sample, based on the impedances measured across at least the portion; and

evaluating the microorganism population in the sample based on the at least one calculated element.

3. A method according to claim 2 wherein the frequencies are between 10 Hz and 10 MHz.

4. A method according to claim 1 or 2 wherein the element comprises Warburg's impedance.

5. A method according to claim 1 or 2 and further comprising incubating the liquid sample for a preselected period of time before measuring the impedance.

6. A method according to claim 1 or 2 wherein the liquid sample comprises a platelet unit.

7. A device for evaluating the microorganism population in a liquid sample comprising:

a container adapted for accommodating the liquid sample; and
an impedance processor which applies an AC voltage at a plurality of frequencies across at least a portion of the liquid. sample and measures the impedance across at least the portion of the liquid sample in response to at least some of the AC frequencies,

wherein the impedance processor comprises circuitry for calculating at least one element of an equivalent electric circuit of the sample based on the impedances measured across at least the portion and for evaluating the microorganism population in the sample based on the at least one calculated element.

8. A device according to claim 7 wherein the AC frequencies are between 10 Hz and 10 MHz.

9. A device according to claim 7 wherein the at least one impedance component comprises an element of an equivalent electric circuit of the sample.

10. A device according to claim 7 wherein the at least one impedance component comprises Warburg's.

11. Apparatus according to claim 7 wherein the liquid sample comprises a platelet unit.

12. Apparatus according to claim 7 wherein the impedance processor is electrically non-invasively associated with the liquid sample.

13. Apparatus according to claim 12 wherein the impedance processor comprises two capacitor plates for electrically non-invasively associating the impedance processor with the liquid sample.

14. Apparatus according to claim 13 wherein said liquid sample has a plurality of sides and wherein both of said two capacitor plates are operatively associated with one of the plurality of sides.

15. Apparatus according to claim 13 and also comprising a ground plate,
wherein said ground plate and said two capacitor plates are largely coplanar, and
wherein said ground plate surrounds and separates said two capacitor plates.

16. A capacitive sensor for use in measuring the impedance of a liquid sample, the capacitive sensor comprising:

two capacitor plates; and
a ground plate,

wherein said ground plate and said two capacitor plates are largely coplanar, and
wherein said ground plate surrounds and separates said two capacitor plates.

17. A capacitive sensor according to claim 16 wherein said liquid sample comprises a platelet unit.

18. A capacitive sensor according to claim 16 wherein the capacitive sensor permanently mounted on the platelet unit.

19. A liquid sample holder for use in measuring the impedance of a liquid sample, the holder comprising:

a container for containing the liquid sample; and
a capacitive sensor comprising:

two capacitor plates; and
a ground plate,

wherein said ground plate and said two capacitor plates are largely coplanar, and
wherein said ground plate surrounds and separates said two capacitor plates.

20. A liquid sample holder according to claim 19 wherein said liquid sample comprises a platelet unit.

Fig.1 .

FIG. 2

FIG. 3

FIG. 4

FIG. 5

FIG. 6

**European Patent Office**

## EUROPEAN SEARCH REPORT

Application Number

EP 03 40 0017

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GOMEZ R ET AL: "Microscale electronic detection of bacterial metabolism" SENSORS AND ACTUATORS B, ELSEVIER SEQUOIA S.A., LAUSANNE, CH, vol. 86, no. 2-3, 20 September 2002 (2002-09-20), pages 198-208, XP004380191 ISSN: 0925-4005 * the whole document * | 1-20 | C12M1/34 C12Q1/02 G01N33/487 G01N27/22 G01N27/06 G01N33/49 |
| X | -& WO 01 79529 A (PURDUE RESEARCH FOUNDATION) 25 October 2001 (2001-10-25) * the whole document * | 1-20 | |
| X | FELICE C J ET AL: "Impedance bacteriometry: medium and interface contributions during bacterial growth." IEEE TRANSACTIONS ON BIO-MEDICAL ENGINEERING. UNITED STATES DEC 1992, vol. 39, no. 12, December 1992 (1992-12), pages 1310-1313, XP001165684 ISSN: 0018-9294 * the whole document * | 1-12 | |
| | | | TECHNICAL FIELDS SEARCHED (Int.Cl.7) |
| X | MADRID R E ET AL: "AUTOMATIC ON-LINE ANALYSER OF MICROBIAL GROWTH USING SIMULTANEOUS MEASUREMENTS OF IMPEDANCE AND TURBIDITY" MEDICAL AND BIOLOGICAL ENGINEERING AND COMPUTING, PETER PEREGRINUS LTD. STEVENAGE, GB, vol. 37, no. 6, November 1999 (1999-11), pages 789-793, XP000875874 ISSN: 0140-0118 * the whole document * | 1-12 | C12M G01N C12Q |

-/--

The present search report has been drawn up for all claims

| Place of search | Date of completion of the search | Examiner |
|---|---|---|
| THE HAGUE | 7 October 2003 | Aslund, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

**European Patent Office**

**EUROPEAN SEARCH REPORT**

Application Number

EP 03 40 0017

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| X,D | HENSCHKE P A ET AL: "DETECTION OF WINE-SPOILING YEASTS BY ELECTRONIC METHODS" JOURNAL OF APPLIED BACTERIOLOGY, OXFORD, GB, vol. 64, 1988, pages 123-133, XP000949055 * the whole document * | 1,2 | |
| A | TSUCHIYA T RERASHIMA E: "Rapid automated detection of bacterial growth by impedance measurement and its application to antibiotic sensitivity testing" NIHON UNIVERSITY JOURNAL OF MEDICINE, NIHON UNIVERSITY SCHOOL OF MEDICINE, TOKYO, JP, vol. 20, no. 4, 1978, pages 319-330, XP002958180 ISSN: 0546-0352 | | |
| A | SILLEY P FORSYTHE S: "Impedance microbiology. A rapid change for microbiologists" JOURNAL OF APPLIED BACTERIOLOGY, OXFORD, GB, vol. 80, no. 3, 1996, pages 233-243, XP002958182 | | TECHNICAL FIELDS SEARCHED (Int.Cl.7) |

The present search report has been drawn up for all claims

| Place of search | Date of completion of the search | Examiner |
|---|---|---|
| THE HAGUE | 7 October 2003 | Aslund, J |

EPO FORM 1503 03.82 (P04C01)